# EUROPÄISCHE PATENTSCHRIFT

(11) **EP 2 450 695 B1**
(45) Veröffentlichungstag und Bekanntmachung des Hinweises auf die Patenterteilung: **17.10.2018**
(21) Anmeldenummer: 11185438.6
(22) Anmeldetag: 17.10.2011
(51) Int. Cl.: G01N 21/90

(54) **Vorrichtung zum Inspizieren von Behältern**
Container inspecting apparatus
Dispositif destiné à inspecter des récipients

(30) Priorität: 09.11.2010 DE 102010043635
(43) Veröffentlichungstag der Anmeldung: 09.05.2012
(73) Patentinhaber: Krones AG, 93073 Neutraubling (DE)
(72) Erfinder: Fiegler, Rudolf, 93073 Neutraubling (DE)
(74) Vertreter: Grünecker Patent- und Rechtsanwälte PartG mbB

(56) Entgegenhaltungen:
- EP-A1- 1 493 501
- EP-A1- 1 498 726
- EP-A2- 1 811 289
- WO-A1-02/01207
- DE-A1-102009 005 433
- US-A1- 2006 098 113
- US-A1- 2007 084 763

## Beschreibung

Die Erfindung bezieht sich auf eine Vorrichtung zum Inspizieren von Behältern oder dgl. der im Oberbegriff von Anspruch 1 erläuterten Art.

Eine derartige Vorrichtung ist aus der EP-A-1 811 289 bekannt. Die bekannte Vorrichtung ist einem Förderweg für die Behälter, insbesondere von Flaschen aus Glas oder Kunststoff, zugeordnet und soll beispielsweise in der Flasche vorhandene Fremdkörper, Fremdstoffe oder dgl. feststellen und dafür sorgen, dass diese Flaschen aus dem weiteren Handhabungsweg entfernt werden; d.h. die bekannte Vorrichtung ist speziell zur Inspektion von zurückgekommenen Mehrwegbehältern ausgebildet, bevor diese in den erneuten Befüllprozess eingeführt werden. Die Inspektion wird bei der bekannten Vorrichtung durch ein Inspektionsmodul durchgeführt, das eine Lichtquelle auf einer Seite des Förderweges und einen Lichtdetektor auf der anderen Seite des Förderweges aufweist. Lichtquelle und Lichtdetektor müssen jedoch einzeln am Förderweg angebracht und einzeln bezüglich des Förderweges justiert werden.

Diese Montage- und Justierarbeiten sind jedoch relativ aufwändig, insbesondere dann, wenn mehrere Sender/Empfänger-Einheiten bzw. mehrere Sensoren eingesetzt werden müssen, wie dies insbesondere bei zurücklaufenden Mehrwegbehältern notwendig ist. Darüber hinaus ist auch der Austausch der Sensoren bzw. Sende/Empfänger-Einheiten aufwändig, wenn beispielsweise defekte Elemente ersetzt oder ganze Einheiten ausgetauscht oder nicht benötigte Einheiten stillgesetzt werden sollen. Darüber hinaus ist für eine kundenspezifisch orientierte Herstellung der gesamten Vorrichtung ein hoher Grad von Einzelfertigung notwendig.

Die EP 1 493 501 A1 offenbart eine Behälterinspektionsmaschine mit einem einfachen Zugang zu den optischen und elektronischen Komponenten zur Wartung.

Die DE 10 2009 005 433 A1 offenbart ein Verfahren und eine Vorrichtung zur Diagnose der Funktionsabläufe in einer Glasformmaschine.

Die WO 02/01207 A1 offenbart ein Verfahren und eine Vorrichtung zur In-Line-Inspektion von Verpackungen.

Der Erfindung liegt somit die Aufgabe zugrunde, eine Vorrichtung zum Inspizieren von Behältern oder dgl. zu schaffen, die universell und flexibel einsetzbar ist.

Die Aufgabe wird durch die im Anspruch 1 angegebenen Merkmale gelöst.

Durch den vollständigen modularen Aufbau der Vorrichtung ist eine große Bandbreite von Veränderungen ohne großen Aufwand und eine starke Reduzierung des kundenspezifischen Einzelfertigungsgrades möglich. Auch können defekte Inspektionsmodule ohne weiteres ausgetauscht werden. Auch können Montage und Justierung größtenteils bereits außerhalb der Anlage erfolgen bzw. zumindest vorbereitet werden.

Die Inspektionselemente des Inspektionsmoduls sind bereits bezüglich der Anordnung des Trägers vorjustiert an einem gemeinsamen Montagegestell befestigt, so dass auch hier die Justierarbeiten verringert werden.

Das Inspektionsmodul enthält eine Kamera, eine Beleuchtungseinrichtung und einen Antrieb für Verstellbewegungen, beispielsweise zur Fokussierung.

Vorteilhafte Weiterbildungen sind den Unteransprüchen zu entnehmen.

Wenn der Träger mit universalen Schnittstellen an jedem Aufnahmeplatz versehen ist, können Inspektionsmodule an beliebigen Stellen, wo sie gerade benötigt werden, angeschlossen werden, wobei deren Anschlussstelle über eine Steuerung problemlos festgestellt werden kann.

Die Schnittstellen können entweder über eine Anschlussschiene, die mehrere Inspektionsmodule aufnehmen kann, oder eine entsprechende Anzahl von Steckplätzen für jeweils ein Inspektionsmodul ausgebildet sein.

Bevorzugt enthält der Träger auch einen Aufnahmeplatz für eine Bewegungseinrichtung für die Behälter, deren Zweck es ist, die Behälter in eine zur Inspektion günstige Stellung zu bringen, so dass die Relativzuordnung zwischen der Bewegungseinrichtung und der Stellung des Behälters, der von dieser bewegt wird, vorab feststeht und eine weitere Justierarbeit für die Inspektionsmodule entfällt.

Sind die Inspektionsmodule mit identischen Anschlüssen versehen, so können sie problemlos mit jeder Schnittstelle am Träger verbunden werden.

Die Verkabelung der Schnittstellen mit der Steuerung erfolgt bevorzugt über ein Bussystem, das einerseits den Kabelaufwand reduziert und andererseits eine wesentlich elegantere und vielseitigere Übertragung von Signalen gestattet.

Weiterhin kann dem Inspektionsmodul eine Behältererkennungseinrichtung zugeordnet sein, die rechtzeitig erkennt, dass sich ein Behälter dem Modul nähert bzw. in den Messbereich des Moduls eintritt.

Ein Ausführungsbeispiel der Erfindung wird nachfolgend anhand der Zeichnungen näher erläutert. Es zeigen:
- Fig. 1: eine perspektivische Darstellung einer erfindungsgemäßen Vorrichtung,
- Fig. 2: eine perspektivische Darstellung eines Trägers,
- Fig. 3: eine perspektivische Darstellung der Vorrichtung nach Fig. 1 mit Erweiterung,
- Fig. 4: eine perspektivische Darstellung eines beispielhaften Inspektionsmoduls, und

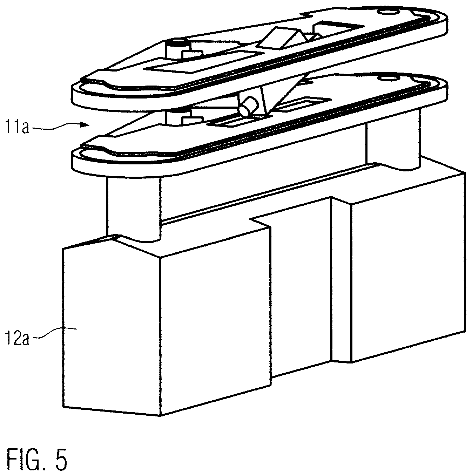

- Fig. 5: eine perspektivische Darstellung einer beispielhaften, modularen Bewegungseinrichtung.

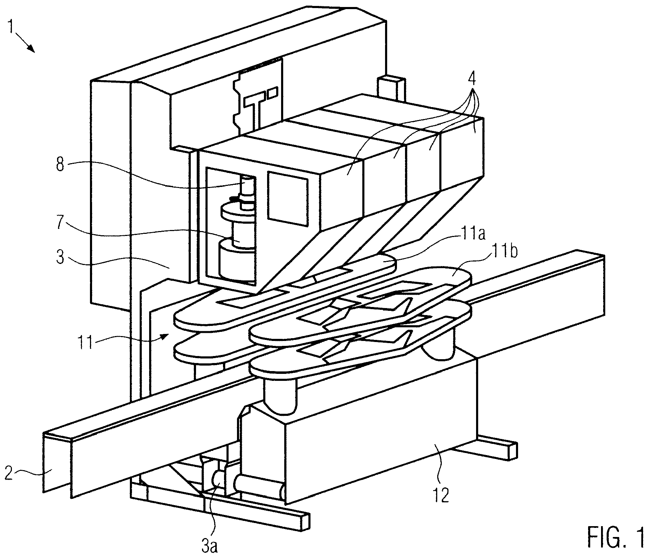

Fig. 1 zeigt eine perspektivische Darstellung einer erfindungsgemäßen, modular aufgebauten Vorrichtung 1 zum Inspizieren von Behältern, insbesondere von Flaschen aus lichtdurchscheinendem Werkstoff, wie beispielsweise Glas oder Kunststoff, die in den unterschiedlichsten Handhabungswegen der Behälter angeordnet und an diese angepasst sein kann, im dargestellten Ausführungsbeispiel jedoch für die Inspektion von Mehrwegbehältern vor dem Wiederbefüllen einsetzbar ist.

Die Erfindung ist jedoch auch in anderen Bereichen der Herstellung und Befüllung von Lebensmittelbehältern einsetzbar, also z.B. zur Inspektion von Preforms oder Verschlüssen, bei der Herstellung oder zur Inspektion des Befüllvorgangs bzw. -zustands. Die Behälter können neben Flaschen auch Dosen oder Gläser aus den unterschiedlichsten Materialien sein.

Die Vorrichtung 1 ist einem Förderweg 2 für die Behälter zugeordnet, der als Fördereinrichtung jeder bekannten Art ausgebildet ist.

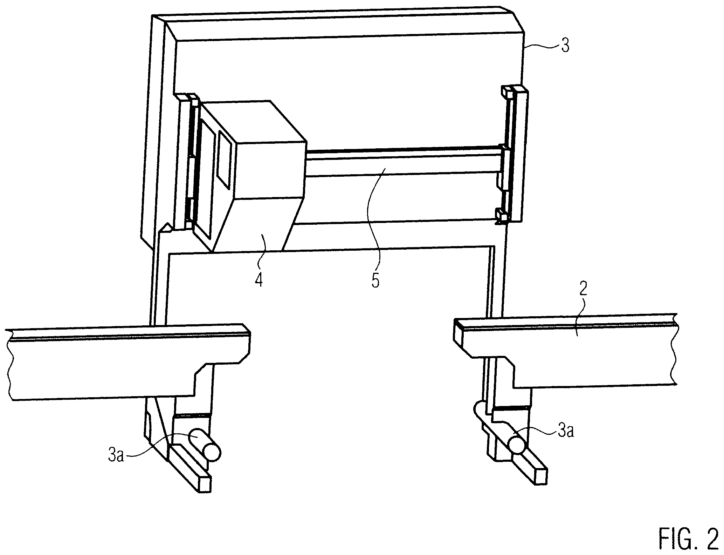

Wie Fig. 2 zeigt, ist in einer vorbestimmten Anordnung zum Förderweg 2 ein Träger 3, z.B. über eine lösbare und justierbare Halterung 3a ortsfest angeordnet, der eine Vielzahl gleicher oder unterschiedlicher, modular aufgebauter Bestandteile, insbesondere Inspektionsmodule 4, aufnehmen kann. Zu diesem Zweck enthält der Träger 3 eine Vielzahl von Aufnahmeplätzen für jeweils eines der Inspektionsmodule 4, wobei jeder Aufnahmeplatz mit einer universell benutzbaren, bevorzugt standardisierten elektrischen/elektronischen Schnittstelle und einer universell benutzbaren mechanischen Halteeinrichtung versehen ist, wobei die Schnittstelle bevorzugt als mechanotronische Schnittstelle ausgebildet ist. Die Aufnahmeplätze sind im dargestellten Ausführungsbeispiel auf einem linearen Aufnahmeelement, insbesondere einer Aufnahmeschiene 5 ausgebildet, die sich im Wesentlichen parallel zum Förderweg 2 erstreckt und so lang ist, dass sie eine Mehrzahl von Inspektionsmodulen 4 nebeneinander aufnehmen kann. Die Aufnahmeschiene 5 ist bevorzugt relativ zum Förderweg 2 verstellbar. Die Aufnahmeschiene 5 dient sowohl als mechanische Halterung als auch, bevorzugt über ein Bussystem, zur Versorgung aller auf der Aufnahmeschiene 5 sitzender Module 4 mit elektrischer Energie als auch zur Übertragung von Signalen von und zu einer Steuerung. Durch den Einsatz universeller Schnittstellen können die Module frei positioniert werden, wobei bei Verwendung eines Bussystems kein erhöhter Verkabelungsaufwand nötig ist.

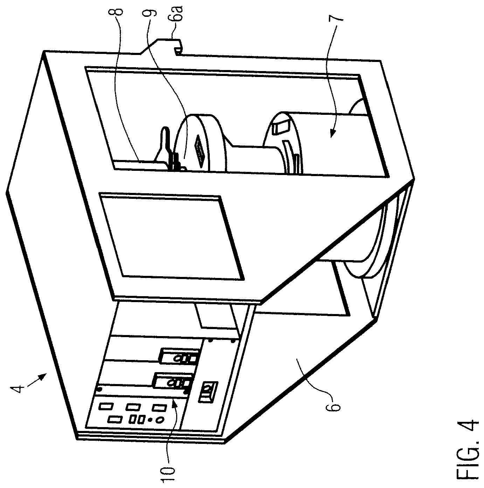

Fig. 4 zeigt in perspektivischer Darstellung eines der verwendeten Module 4. Das Inspektionsmodul 4 enthält ein Montagegestell 6, das im dargestellten Ausführungsbeispiel in der Art eines Schutzgehäuses ausgebildet ist. Bevorzugt sind alle Inspektionsmodule 4 mit identischen Montagegestellen 6 ausgebildet, auch wenn sie unterschiedliche Inspektionselemente enthalten. Das dargestellte Inspektionsmodul 4 enthält alle für den Betrieb notwendigen Inspektionselemente, also insbesondere einen Signalgeber 7, hier in Form einer Beleuchtung, wie beispielsweise einer Mündungsdoppelbeleuchtung, und einen Signalempfänger 8, wie beispielsweise eine Kamera, sowie eine Bewegungseinrichtung 9, wie beispielsweise einen Servomotor zum Fokussieren oder für andere Bewegungen der Elemente 7, 8 des Moduls 4. Weiterhin kann je nach Art der Signalgeber/Signalempfänger eine Steuerung 10 vorgesehen sein, die beispielsweise die Signalverarbeitung (Bildverarbeitung) übernimmt. Das Inspektionsmodul 4 ist bevorzugt autark, d.h. die Steuerung 10 ist in der Lage, alle Daten zu verarbeiten, die für eine Gut/Schlecht-Entscheidung notwendig sind.

Am Montagegestell 6 ist an einer vorbestimmten Stelle eine mechanische Halteeinrichtung 11 mit zugeordneten, ebenfalls universellen elektrischen/elektronischen Anschlüssen vorgesehen, die zu einer Mehrzahl von Anschlussplätzen am Träger 3 passen. Da die Anordnung der Halteeinrichtung 11 am Montagegestell 6 und deren Anordnung an der Anschlussschiene 5 sowie die Stellung der Anschlussschiene 5 zum Förderweg 2 bekannt ist oder festgelegt werden kann, können die Bestandteile des Inspektionsmoduls im Montagegestell 6 vorjustiert eingebaut werden, so dass die Module 4 sofort nach dem Einhängen in die Anschlussschiene 5 betriebsbereit sind.

Außer den beschriebenen Elementen kann das Modul 4 auch noch mit weiteren, für die Art der Inspektionselemente notwendigen oder zweckmäßigen Elementen beispielsweise mit einer Behältererkennungseinrichtung, wie einer Lichtschranke, versehen sein, die dadurch bei Einsatz einer Kamera in einem festen Abstand zur Objektivmitte montiert werden kann, so dass beispielsweise die entsprechenden Inspektionselemente, abgestimmt auf die Fördergeschwindigkeit der Behälter im Förderweg 2, betriebsbereit geschaltet werden können, sobald sich ein Behälter dem entsprechenden Modul 4 nähert. Die Behältererkennungseinrichtung kann direkt in oder am zugeordneten Modul 4 befestigt oder als separates Erkennungsmodul ausgebildet und z. B. an einem vorbestimmten Aufnahmeplatz im oder am Förderweg 2 (z. B. in Reihe mit den Inspektionsmodulen 4 auf der Aufnahmeschiene 5 oder auf einem Steckplatz oder dgl.) angeordnet sein.

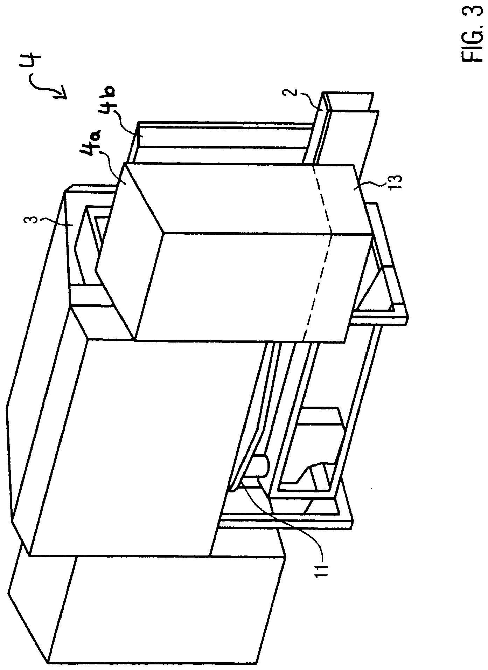

Die Inspektionsmodule 4 sind so an der Anschlussschiene 5 aufgehängt, dass sie sich oberhalb der Behälter auf dem Förderweg 2 befinden. Erfordert es eine bestimmte Inspektionsart, dass die Inspektionselemente an anderen Stellen angeordnet sein müssen, so kann, wie Fig. 3 zeigt, seitlich am Träger 3 (oder auch unterhalb) angebaut werden, wobei auch dort universelle elektrische/elektronische sowie mechanische Schnittstellen vorgesehen sind, die zu einer Mehrzahl der Module passen. Diese können auch hier entweder als Anschlussschienen oder als Steckplätze ausgebildet sein, in die weitere Inspektionsmodule 4 durch Einstecken mit dem Träger 3 verbunden werden können. Im dargestellten Ausführungsbeispiel sind dies die Inspektionselemente 4a, 4b von sogenannten Spiegelkabinetten, die für eine Seitenwandkontrolle der Behälter eingesetzt werden. Für diese Aufgabe müssen die Elemente 4a, 4b beidseitig des Förderweges 2 angeordnet sein, so dass die Behälterwandung durch die Messsignale optimal erreicht wird.

Auch die Inspektionsmodule 4 sind in einem entsprechenden Montagerahmen (bevorzugt ein Gehäuse) aufgenommen, der mit den standardisierten Schnittstellen an vorbestimmter Stelle versehen ist, so dass beim Verbinden mit dem Träger 3 auch die Inspektionsmodule 4 optimal auf den Förderweg 2 ausgerichtet sind und weitere Justierarbeiten nicht notwendig werden.

Für bestimmte Inspektionszwecke ist es notwendig, die Behälter getrennt vom Förderweg 2 durch die Inspektionsvorrichtung 1 zu transportieren oder beispielsweise zu drehen oder zu kippen. Für diese Fälle enthält die Vorrichtung 1 eine Bewegungseinrichtung 11, die ebenfalls modular aufgebaut ist. Die Bewegungseinrichtung 11 enthält zwei spiegelbildlich aufgebaute Fördereinheiten 11a, 11b, die jeweils aus zwei übereinanderliegenden, an der Behälterwandung angreifenden, endlos umlaufenden Bändern bestehen, wobei jedoch bei niedrigen Behältern auch nur eines der Bänder vorgesehen sein kann. Die Fördereinheiten 11a, 11b sind unabhängig voneinander steuerbar, wobei ihre Motoren in jeweils einem Gehäuse 12a, 12b untergebracht sind, das in bereits oben beschriebener Weise an vorbestimmten Stellen mit den mechanischen und elektrischen/elektronischen Schnittstellen zum Anschluss an entsprechende Schnittstellen am Träger 3, versehen sind. Im dargestellten Ausführungsbeispiel sind dies z.B. eine unterhalb des Förderwegs 2 angeordneten Anschlussschiene oder Steckplätze, auf die die Bewegungselemente 11a, 11b mit ihren Gehäusen 12a, 12b aufgesteckt werden. Auch dadurch ist die Lage der Bewegungselemente 11a, 11b bezüglich des Förderweges 2 festgelegt, so dass eine Vorjustierung außerhalb der Maschine stattfinden kann.

Je nach Anforderung kann die Hauptsteuerung der erfindungsgemäßen Vorrichtung 1 ebenfalls am Träger 3 angeordnet werden, beispielsweise untergebracht in einem dafür reservierten, gesonderten Bereich 13 eines der Gehäuse 4a des Inspektionsmoduls 4, das dafür entsprechend vergrößert wird, oder in einem gesonderten Gehäuse.

Unabhängig von der Anordnung der Steuerung erfolgt die Übertragung der Impulse und Signale über ein Bussystem, so dass jedem der Module 4, 11 eine Adresse zugewiesen werden kann, was es gestattet, insbesondere die Inspektionsmodule 4 je nach Betriebserfordernissen an den unterschiedlichsten Aufnahmeplätzen anordnen, ohne dass neu verkabelt werden muss. Dadurch ist es weiterhin möglich, Aufnahmeplätze freizulassen und diese durch das Bussystem zu überbrücken, so dass nicht benötigte Module problemlos weggelassen werden können. Dadurch ist es weiterhin möglich, die beschriebenen Inspektionsmodule 4 gegen andere Module oder das beschriebene Bewegungsmodul 11 gegen ein anderes Bewegungsmodul auszutauschen, das beispielsweise an eine andere Form der Behälter oder an andere Bewegungsmuster angepasst ist.

In Abwandlung der beschriebenen und gezeichneten Ausführungsbeispiele können Module auch mit anderen Inspektionselementen als eine Kamera und eine Beleuchtung eingesetzt werden. Die Anordnung der Module entlang der Anschlussschienen oder auf den Steckplätzen ist frei wählbar, so dass z.B. die Bewegungseinrichtung oder ein Inspektionsmodul auch entlang einer Anschlussschiene verfahrbar ausgebildet sein kann.

## Patentansprüche

1. Vorrichtung (1) zum Inspizieren von Behältern oder dgl., insbesondere von Flaschen aus Glas oder Kunststoff, mit einem an einem Förderweg (2) montierten Inspektionsmodul (4), wobei die Vorrichtung (1) als modular aufgebaute Inspektionseinheit mit einem Träger (3) mit Aufnahmeplätzen für eine Mehrzahl von Inspektionsmodulen (4) ausgebildet ist, und wobei das Inspektionsmodul (4) eine Mehrzahl von Inspektionselementen (7, 8, 9) in einem gemeinsamen Montagegestell (6) in einer bezüglich der Anordnung des Trägers (3) zum Förderweg (2) justierten Anordnung aufweist,
**dadurch gekennzeichnet, dass**
das Inspektionsmodul (4) eine Kamera (8), eine Beleuchtungseinrichtung (7) und einen Antrieb (9) für Verstellbewegungen, zusammengefasst im Montagegestell (6) enthält.

2. Vorrichtung nach Anspruch 1, **dadurch gekennzeichnet, dass** der Träger (3) mit universellen elektrischen/elektronischen und/oder mechanischen Schnittstellen (5) an jedem Aufnahmeplatz für jeweils ein Inspektionsmodul (4) versehen ist.

3. Vorrichtung nach Anspruch 1 oder 2, **dadurch gekennzeichnet, dass** der Träger (3) wenigstens eine zur Aufnahme mehrerer Inspektionsmodule (4) ausgebildete Anschlussschiene (5) enthält.

4. Vorrichtung nach einem der Ansprüche 1 bis 3, **dadurch gekennzeichnet, dass** der Träger (3) eine Mehrzahl von Steckplätzen für jeweils ein Inspektionsmodul (4) aufweist.

5. Vorrichtung nach einem der Ansprüche 1 bis 4, **dadurch gekennzeichnet, dass** der Träger (3) einen Aufnahmeplatz für ein Bewegungsmodul (11) für die Behälter aufweist.

6. Vorrichtung nach einem der Ansprüche 1 bis 5, **dadurch gekennzeichnet, dass** die Inspektionsmodule (4) mit identischen Anschlüssen zum Anschluss an einem von einer Vielzahl gleichartiger Aufnahmeplätze am Träger (3) versehen sind.

7. Vorrichtung nach einem der Ansprüche 1 bis 6, **dadurch gekennzeichnet, dass** jeder Aufnahmeplatz über ein Bussystem mit einer Steuerung (13) verbunden ist.

8. Vorrichtung nach einem der Ansprüche 1 bis 7, **dadurch gekennzeichnet, dass** dem Inspektionsmodul (4) eine Behältererkennungseinrichtung zugeordnet ist.

9. Vorrichtung nach Anspruch 3, **dadurch gekennzeichnet, dass** die Anschlussschiene (5) ein lineares Element ist.

## Claims

1. Device (1) for inspecting containers or the like, in particular bottles of glass or plastics, with an inspection module (4) mounted at a conveying path (2), wherein the device (1) is embodied as a modular inspection unit with a support (3) with location places for a plurality of inspection modules (4), and wherein the inspection module (4) comprises a plurality of inspection elements (7, 8, 9) in a common assembly frame (6) in an arrangement adjusted with respect to the arrangement of the support (3) with respect to the conveying path (2)
**characterized in that**
the inspection module (4) contains a camera (8), a lighting means (7) and a drive (9) for adjusting movements, combined in an assembly frame (6).

2. Device according to claim 1, **characterized in that** the support (3) is provided with all-purpose electric/electronic and/or mechanical interfaces (5) at each location place for one inspection module (4) each.

3. Device according to claim 1 or 2, **characterized in that** the support (3) contains at least one connection rail (5) for receiving several inspection modules (4).

4. Device according to one of claims 1 to 3, **characterized in that** the support (3) comprises a plurality of plug-in positions for one inspection module (4) each.

5. Device according to one of claims 1 to 4, **characterized in that** the support (3) comprises a location place for a moving module (11) for the containers.

6. Device according to one of claims 1 to 5, **characterized in that** the inspection modules (4) are provided with identical connections to be connected to one of a plurality of similar location places at the support (3).

7. Device according to one of claims 1 to 6, **characterized in that** each location place is connected with a control system (13) via a bus system.

8. Device according to one of claims 1 to 7, **characterized in that** a container detection means is allocated to the inspection module (4).

9. Device according to claim 3, **characterized in that** the connection rail (5) is a linear element.

## Revendications

1. Installation (1) destinée à l'inspection de contenants ou d'éléments similaires, notamment de bouteilles en verre ou en matière plastique, comprenant un module d'inspection (4) monté le long d'un parcours de transport (2), l'installation (1) étant réalisée sous la forme d'une unité d'inspection de construction modulaire avec un support (3) comportant des emplacements d'accueil pour une pluralité de modules d'inspection (4), et le module d'inspection (4) présentant une pluralité d'éléments d'inspection (7, 8, 9) dans un bâti de montage (6) commun, selon un agencement ajusté relativement à l'agencement du support (3) par rapport au parcours de transport (2),
**caractérisée en ce que**
le module d'inspection (4) renferme de manière regroupée dans le bâti de montage (6), une caméra (8), un dispositif d'éclairage (7) et un entraînement (9) pour des mouvements de déplacement.

2. Installation selon la revendication 1,
**caractérisée en ce que** le support (3) est pourvu d'interfaces électriques/électroniques et/ou mécaniques (5) universelles au niveau de chaque emplacement d'accueil pour un module d'inspection (4) respectif.

3. Installation selon la revendication 1 ou la revendication 2, **caractérisée en ce que** le support (3) comporte au moins un rail de raccordement (5) réalisé pour l'accueil de plusieurs modules d'inspection (4).

4. Installation selon l'une des revendications 1 à 3, **caractérisée en ce que** le support (3) présente une pluralité d'emplacements d'enfichage, chacun respectivement destiné à un module d'inspection (4).

5. Installation selon l'une des revendications 1 à 4, **caractérisée en ce que** le support (3) comporte un emplacement d'accueil pour un module de mouvement de déplacement (11) destiné aux contenants.

6. Installation selon l'une des revendications 1 à 5, **caractérisée en ce que** les modules d'inspection (4) sont pourvus de raccords de connexion identiques pour le raccordement à l'un d'une pluralité d'emplacements d'accueil de même type sur le support (3).

7. Installation selon l'une des revendications 1 à 6, **caractérisée en ce que** chaque emplacement d'accueil est relié à une commande (13), par l'intermédiaire d'un système de bus.

8. Installation selon l'une des revendications 1 à 7, **caractérisée en ce qu'**au module d'inspection (4) est associé un dispositif de reconnaissance de contenant.

9. Installation selon la revendication 3,
**caractérisée en ce que** le rail de raccordement (5) est un élément linéaire.
